# EUROPEAN PATENT SPECIFICATION

(11) **EP 4 240 133 B1**
(45) Date of publication and mention of the grant of the patent: **16.04.2025**
(21) Application number: 21814880.7
(22) Date of filing: 09.11.2021
(51) Int. Cl.: A01B 33/08, A01B 33/06, A01B 23/04, A01B 21/06

(54) **TOOL-CARRYING GROUP FOR AGRICULTURAL MACHINES**
WERKZEUGTRAGENDE GRUPPE FÜR LANDWIRTSCHAFTLICHE MASCHINEN
GROUPE PORTE-OUTILS POUR MACHINES AGRICOLES

(30) Priority: 09.11.2020 IT 202000026672; 09.11.2020 IT 202000006245 U
(43) Date of publication of application: 13.09.2023
(73) Proprietor: Maschio Gaspardo S.p.A., 35011 Campodarsego (PD) (IT)
(72) Inventor: MASCHIO, Andrea, 33075 Morsano Al Tagliamento (PN) (IT); BARALDI, Paolo, 35137 Padova (IT)
(74) Representative: Locas, Davide
(86) International application number: PCT/IB2021/060346
(87) International publication number: WO 2022/097116

(56) References cited:
- EP-A1- 2 232 972
- EP-A2- 0 398 384
- CN-U- 211 210 384
- GB-A- 1 508 504

## Description

The present invention relates to a tool-carrying group for agricultural machines, in particular for rotary harrows, and an agricultural machine comprising such a tool-carrying group.

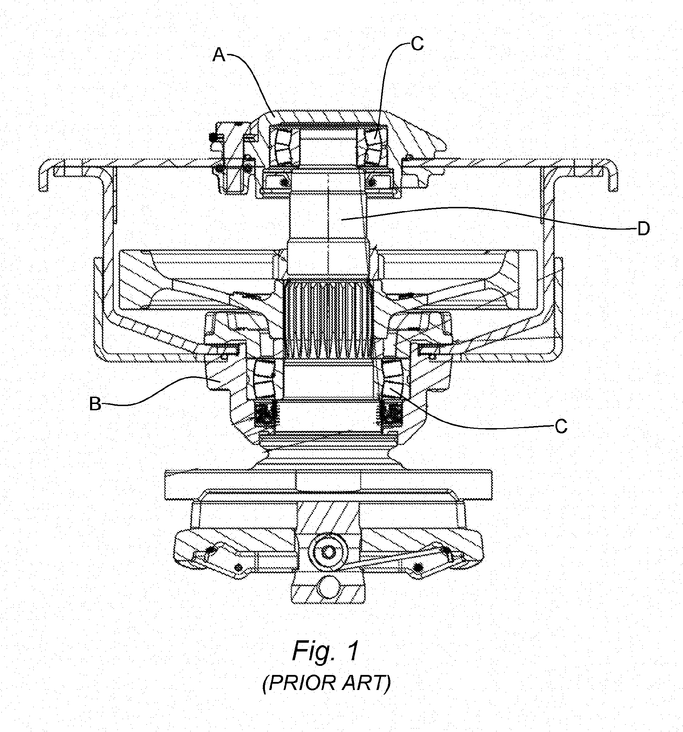

A tool-carrying group constructed according to the prior art is shown in Figure 1. The group according to the prior art comprises a first flanged element A and a second flanged element B which are fixed to the supporting structure of a machine and which are provided with respective rolling bearings C which rotatably support a mechanical transmission shaft D for a rotational movement. A similar tool-carrying group is also described in EP2232972A1 in the name of the same Applicant.

In this context, the rolling bearings allow a reduction in the friction during the rotation of the shaft. However, it is evident that the presence of rolling bearings increases the complexity and the spatial requirement of the tool-carrying group.

This problem is particularly perceived in the agricultural sector, where it is known to use rotary machines, such as rotary harrows, in which there are present a large number of rotors, each of which comprises a shaft which is provided with blades and which is rotated in order to apply a mechanical action to the ground. It will be appreciated that, in this case, there is provided a tool-carrying group for each blade-carrying shaft and, therefore, it is necessary to have a high number of additional bearings.

A tool-carrying group in which the blade-carrying shaft is rotatably supported by means of a single rolling bearing is known from EP0398384A2. However, it is evident that the presence of a single bearing is not found to be optimum for firmly supporting the rotor during the processing of the ground.

In fact, the problem of supporting a rotor of a rotary harrow has evident difficulties as a result of the harsh operating conditions of the shaft which can be subjected to repeated and variable loading cycles over time. In particular, the blades which operate on the ground transmit to the respective blade-carrying shafts mechanical stresses which have a variable magnitude and direction depending on the rotation speed of the rotors, the advance speed of the agricultural machine and the conditions of the ground, as well as any obstacles (stones, stumps, pieces of wood and the like). Therefore, the tool-carrying groups have to be structurally rigid and particularly resistant in order to support the stresses transmitted by the respective blade-carrying shafts.

A peculiar aspect of the tool-carrying group described in EP0398384A2 is that the internal rolling track of the bearing is constructed in one piece in the blade-carrying shaft. Although this solution has the merit of reducing the number of additional components because the internal ring of the bearing is structurally integrated with the shaft, it involves a series of disadvantages.

First of all, the fact that the internal rolling track of the bearing is constructed in one piece in the blade-carrying shaft means that, in order to replace the bearing, particularly in the case of damage to the internal rolling track, it is necessary to replace the entire blade-carrying shaft with a resultant burden of costs for the repair.

Furthermore, the fact that the internal rolling track of the bearing is constructed in one piece in the shaft involves the shaft having to be a special shaft and it not being possible to use a shaft of the conventional type. The conventional shafts which are commercially available do not in fact have rolling tracks for rolling elements.

Furthermore, the assembly process of the bearing on the shaft presupposes that the individual rolling elements are inserted through suitable openings which are formed between the internal and the external rolling tracks. This process is rather complicated and in any case it is difficult to apply because it is not clear how it is possible to construct a cage for this bearing. Furthermore, it is not clear how the openings are closed following the insertion of the rolling elements. Therefore, when the tool-carrying group is under an axial load, the rolling elements are capable of leaving the above-mentioned openings, compromising the capacity for axial loading of the group itself.

Furthermore, it must be observed that the tool-carrying group can be loaded in the presence of external contaminants, such as, for example, earth or dust, which are introduced into the rolling bearings, accelerating the wear and reducing the service-life thereof.

Furthermore, the introduction of dust or dirt into the bearings and the wear which results therefrom inevitably increases the power consumption during the rotation of the rotors.

Additional examples of known tool-carrying groups are described in GB1508504A or CN211210384U.

The technical problem addressed by the present invention is to provide a tool-carrying group and an agricultural machine comprising such a tool-carrying group which are structurally and functionally configured to at least partially overcome one or more of the disadvantages set out with reference to the cited prior art.

In the context of this problem, an object of the present invention is to provide a tool-carrying group which allows bearings to be replaced without having to replace the entire tool-carrying shaft.

Another object of the invention is to provide a tool-carrying group which allows the use and simple assembly of a shaft of the conventional type, particularly a shaft without rolling tracks for rolling elements.

An object of the invention is also to provide a tool-carrying group which has a greater capacity for loading and/or less structural complexity with respect to the known tool-carrying groups.

This problem is solved and these objects are achieved by the invention by means of a tool-carrying group and an agricultural machine comprising such a tool-carrying group which are constructed according to one or more of the features of the appended claims.

According to the invention this problem is solved by constructing a tool-carrying group for agricultural machines, in particular for rotary harrows, comprising two supports which are configured to be mounted axially with spacing on a supporting structure so as to rotatably support a tool-carrying shaft on the supporting structure.

It may be noted that, in this context, the term "tool-carrying shaft" is preferably intended to be understood to be a shaft which is configured to transmit a rotational movement from a rotational actuation device of the agricultural machine to one or more agricultural tools which are or can be fixed to an end of the shaft by reversible connection means. In a preferred embodiment, the end of the tool-carrying shaft is provided with seats or holes for bringing about a connection (for example, a bolted connection) to the tools.

Each of the two supports includes a flanged element which is configured to be removably secured to the supporting structure and in which an axial seat is defined.

It may be noted that, in this context, the term "flanged element" is preferably intended to be understood to be a mechanical component which is intended for non-permanent connection of other components by means of screws or bolts. In a preferred embodiment, the flanged element is provided with openings, preferably holes, for bringing about a bolted connection.

Each support further comprises a bearing ring which is received in the seat and which is configured to engage with the tool-carrying shaft, and a plurality of rolling elements which support the bearing ring in terms of rotation inside the seat.

The bearing ring advantageously retains the rolling elements in the seat thereof in such a manner that the support can be provided as a preassembled unit ready to receive a shaft of the conventional type on which the bearing ring can be fitted without any difficulty.

Preferably, each bearing ring is configured to engage with the tool-carrying shaft so as to axially secure the tool-carrying shaft, for example, by means of an interference connection between the ring and shaft. In this manner, in order to mount the shaft it is sufficient to insert it into the bearing rings. In a greatly preferred embodiment, the shaft has shoulders, against which the respective bearing rings abut so as to also ensure an axial securing between the rings and the shaft in the presence of a high axial load.

The rolling elements are interposed between a first rolling track which is constructed at the periphery of the bearing ring and a second rolling track which faces the first rolling track. It must be observed that, in at least one of the two supports, the second rolling track is constructed in one piece in the flanged element and is structurally integrated therewith so as to define with the bearing ring and the rolling elements a rolling bearing which is integrated in the flanged element.

It will be appreciated that, by forming the seat of the rolling elements directly in the flanged element, it is possible to use rolling elements which are larger, with equal spatial requirement of the support. Therefore, this solution allows an increase of the loading capacity of the support while reducing at the same time the structural complexity thereof. Furthermore, this solution allows a potential failure of the bearing to be resolved by replacing the corresponding support without any need for having to also replace the tool-carrying shaft. Another advantage of this solution is the possibility of mounting a bearing cage of the conventional type which is commercially available.

Preferably, in both supports the second rolling track is constructed in one piece in the respective flanged element and is structurally integrated therewith so as to define, with the respective bearing ring and the respective rolling elements, a rolling bearing which is integrated in the respective flanged element. In this manner, the production of the supports is greatly standardized.

In one aspect, the two supports are configured to be mounted on the supporting structure with spacing from each other along the axis of the tool-carrying shaft so as to effectively counteract the external stresses which tend to flex the shaft.

In one aspect, a first support of the supports comprises a first blind seat which is configured to receive a first end of the tool-carrying shaft, and a second support of the supports comprises a second through-seat, the through-hole of which is configured for the passage of the tool-carrying shaft.

Advantageously, the rolling elements are spheres. According to another advantageous aspect, the flanged element, the bearing ring and the spheres of the first support define a four-point contact ball bearing.

In some embodiments, the second support comprises an axial collar and a sealing element which is configured to be applied between the collar and the tool-carrying shaft. In this manner, the sealing element prevents contamination of the rolling elements and the rolling tracks. Preferably, the sealing element is a cassette seal.

In one aspect, the present invention relates to an agricultural machine comprising at least one tool-carrying group and furthermore a supporting structure to which the tool-carrying group is removably secured, and a tool-carrying shaft which is rotatably supported on the supporting structure by means of the tool-carrying group.

Preferably, the supporting structure comprises a box-shaped beam which includes a first wall and a second wall which are facing and spaced apart from each other. In this case, the first support is removably secured (for example, by means of a bolted connection of the respective flanged element) to the first wall, and the second support is removably secured (for example, by means of a bolted connection of the respective flanged element) to the second wall.

In some embodiments, the agricultural machine is a rotary harrow and the tool-carrying shaft is a blade-carrying shaft.

It may be noted that, in this context, the term "blade-carrying shaft" is intended to be understood to be a tool-carrying shaft which is or can be rotatably secured to a rotary harrow and which is provided to support a plurality of rotary harrow blades which - due to the rotation of the shaft - apply a mechanical action to the ground.

It must be observed that, advantageously, the agricultural machine comprises a plurality of tool-carrying groups and respective tool-carrying shafts.

The features and advantages of the invention will be better appreciated form the following detailed description of a preferred though non-exclusive embodiment which is illustrated by way of non-limiting example with reference to the appended drawings, in which:
- Figure 1 illustrates a tool-carrying group according to the prior art;
- Figure 2 is a front view of an agricultural machine according to an embodiment of the present invention;
- Figure 3 is a cross-section along the line III-III of a detail of Figure 2;
- Figure 4 illustrates a detail of Figure 3;
- Figure 5 illustrates a detail of Figure 4;
- Figures 6 and 7 are perspective views of the detail of Figure 5;
- Figure 8 illustrates a detail of Figure 4;
- Figure 9 is a perspective view of the detail of Figure 8.

In the Figures, there is generally designated 100 an agricultural machine of the type of a rotary harrow comprising a plurality of rotors 110 which are provided with blades 103 for processing and refining the soil.

It may be noted that, in the present embodiment, the agricultural machine is represented by a rotary harrow and the tools of the agricultural machine are represented by blades but, as will be set out below, the same concepts may also be applied to other types of agricultural machines and respective tools, provided that they are generally characterized by an actuation of the rotary type.

The rotors 110 are associated with the frame of the agricultural machine 100 in the region of a supporting structure, preferably a box-shaped beam 102 which extends longitudinally along a longitudinal axis Y.

In some embodiments, the agricultural machine 100 may further comprise rotors 110 which are associated with foldable lateral portions of the frame. Each rotor 110 is provided with a blade-carrying shaft 101 which extends through the box-shaped beam 102 and which is rotatable about a respective rotation axis X which is preferably perpendicular to the longitudinal axis Y of the box-shaped beam 102.

Advantageously, the blade-carrying shafts 101 are caused to rotate by means of transmission gears (not shown) which are contained in a protected manner in the box-shaped beam 102. The transmission gears in turn receive the rotational movement from a rotary actuation device 109 which is associated with the agricultural machine 1. In a preferred embodiment, the rotary actuation device 109 is a transmission box which is configured to receive the rotational movement from a power take-off (PTO) of an agricultural tractor.

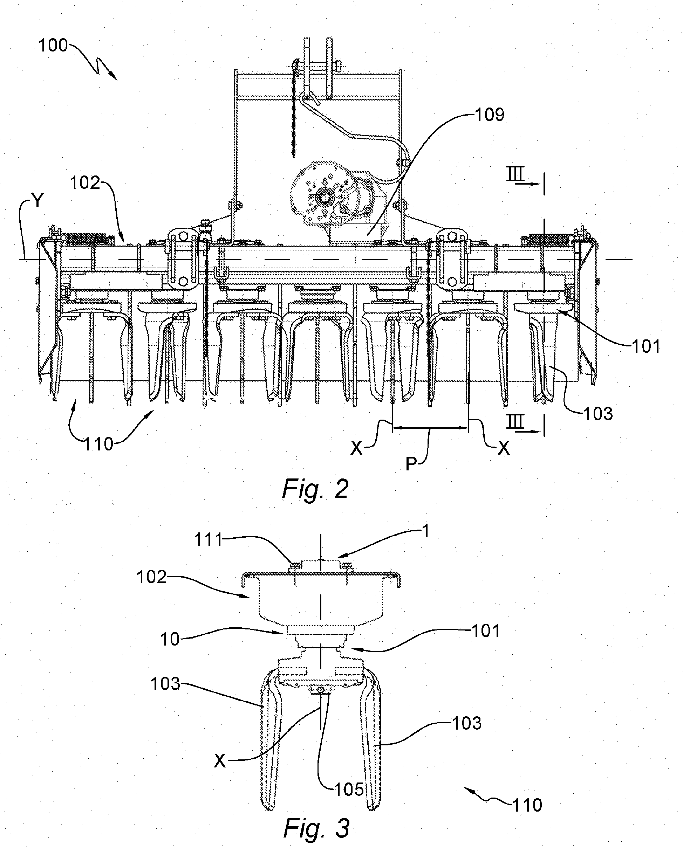

In one aspect, along the longitudinal axis Y of the box-shaped beam 102, the rotors 110 are distributed with a pitch P which is defined as the distance between the rotation axes X of two adjacent blade-carrying shafts 101, as shown in Figure 2.

Each blade-carrying shaft 101 is rotatably associated with the box-shaped beam 102 by means of a tool-carrying group 10 comprising a first support 1 and a second support 1' which are mutually spaced apart and arranged coaxially relative to the rotation axis X of the respective blade-carrying shaft 101.

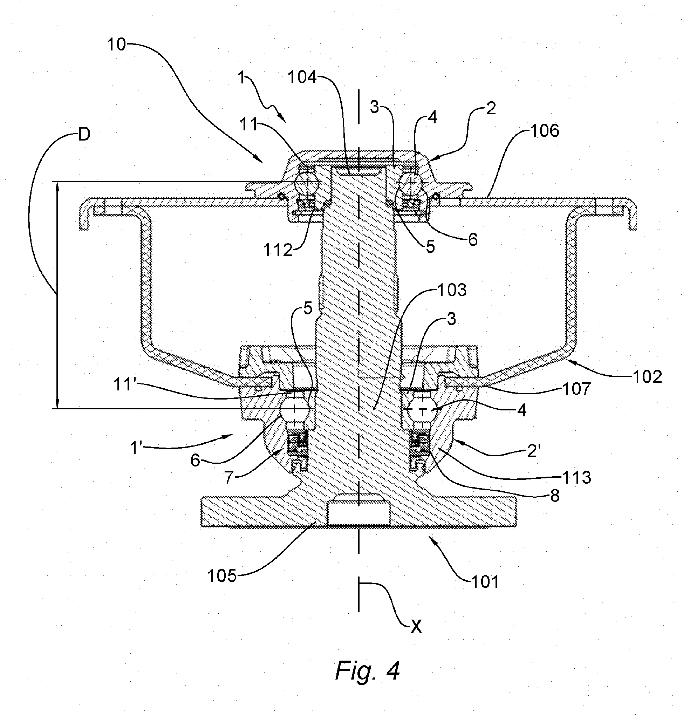

In a greatly preferred embodiment, the blade-carrying shaft 101 extends longitudinally between a first wall 106 and a second wall 107 of the box-shaped beam 102 which face and are spaced apart from each other. In this example, the first support 1 and the second support 1' are or can be removably secured to the box-shaped beam 102 in the region of the inlet and outlet sections of the blade-carrying shaft 101 via the same box-shaped beam. In particular, the first support 1 is removably secured to the first wall 106 and the second support 1' is removably secured to the second wall 107. This arrangement allows the first support 1 to be positioned at a distance D from the second support 1', as shown in Figure 4, so as to reduce the vibrations and the loading on the supports 1 and 1' when the shaft 101 is rotating.

In one aspect, each blade-carrying shaft 101 along the individual axis X has a first end 104 which is secured to the first support 1, a longitudinal portion 103 which is secured to the second support 2 and a second end 105 which is directed at the opposite side to the first end 104 and which is provided to support tools, such as, for example, the blades 103 of the harrow. In a preferred embodiment, the longitudinal portion 103 of the shaft is defined between the first end 104 and the second end 105 in a position axially spaced apart from the first end 104 and preferably behind the second end 105 so as to ensure an adequate distance D between the rotatable securing locations of the shaft 101 along the rotation axis X.

Each of the supports 1 and 1' comprises a flanged element which is designated 2 and 2', respectively, and which is or can be removably secured to a wall of the box-shaped beam 102.

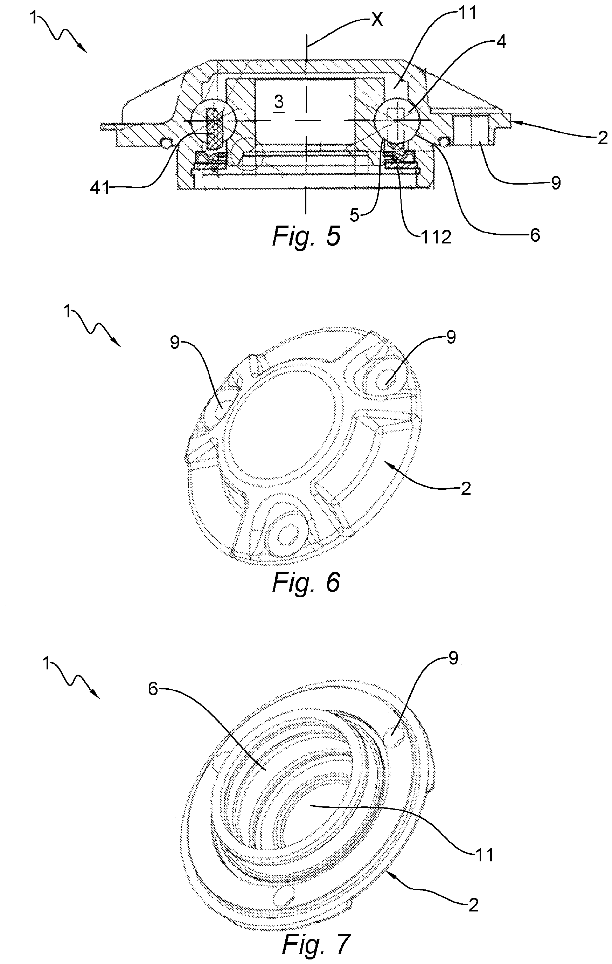

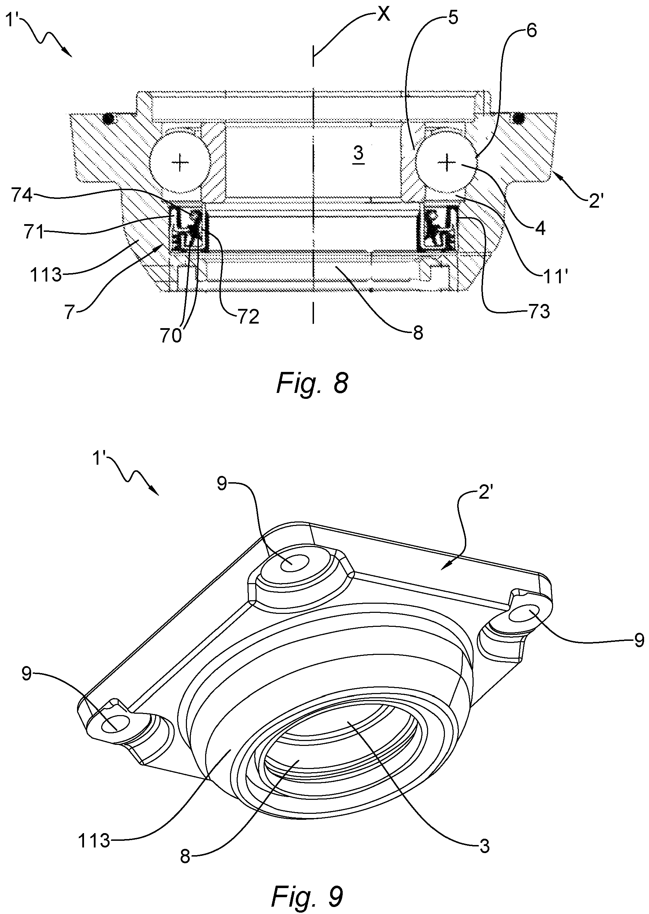

As shown in Figures 6 and 7, the flanged element 2 of the first support 1 may have, for example, a circular shape. However, the flanged element 2' of the second support 1' may have, for example, a square shape, as shown in Figure 9. It will be understood that the flanged elements 2 and 2' may have any other shape.

Preferably, each of the flanged elements 2 and 2' has openings 9 in order to construct a bolted connection with the supporting structure of the machine 1. In some embodiments, the openings 9 are holes. Preferably, the holes are through-holes and/or extend parallel with the axis X. In a greatly preferred embodiment, the holes are distributed along the perimeter of the flanged elements 2, 2'. Advantageously, the holes are configured to receive removable connection means (for example, bolts 111) with respect to the walls of the box-shaped beam 102.

There are defined in the flanged elements of the first support 1 and the second support 1' a first seat 11 and a second seat 11' which extend along the axis X, respectively. Advantageously, the first seat 11 which is defined in the flanged element 2 of the first support 1 is blind and is configured to receive the first end 104 of the blade-carrying shaft 101 at the side of the first support 1 which is directed towards the box-shaped beam 102, as shown in Figures 4 to 7. According to another advantageous aspect, the second seat 11' which is defined in the flanged element 2' of the second support 1' is passed through by a through-hole 8 and is configured to allow the passage of the longitudinal portion 103 of the blade-carrying shaft 101 through the through-hole 8, as shown in Figures 4, 8 and 9.

The first support 1 and the second support 1' each comprise a bearing ring 3 which is received in the first seat 11 and in the second seat 11', respectively, and which is configured to engage in the blade-carrying shaft 101. In order to support the bearing ring 3 in terms of rotation inside the respective seat, there is provided a plurality of rolling elements 4 which are interposed between the bearing ring 3 and the flanged element of the respective support. In particular, the rolling elements 4 are interposed between a first rolling track 5 which is constructed at the periphery of the bearing ring 3 and a second rolling track 6 which faces the first rolling track 5 and which is constructed in one piece in the flanged element of the respective support.

It must be observed that the second rolling track 6 is structurally integrated with the respective flanged element so as to define therewith, and furthermore with the bearing ring 3 and the rolling elements 4, a rolling bearing which is integrated in the same flanged element. This solution allows the use of rolling elements 4 with greater dimensions than those used in a conventional tool-carrying group as described above with reference to the prior art without this further involving a greater spatial requirement of the group itself.

Advantageously, the rolling elements 4 are spheres. According to another advantageous aspect, the flanged element 2, the bearing ring 3 and the spheres 4 of the first support 1 define a four-point contact ball bearing.

It may be noted that, in this context, the term "four-point contact ball bearing" is intended to be understood to be an angular radial bearing with a ring of spheres 4 with tracks which are configured to support axial loads in both directions. It must be observed that, for a given axial load, this bearing can also support a radial load. Therefore, a single bearing with four contact points is an advantageous alternative to two paired angular bearings with a ring of spheres, as it reduces the dimensions of the first support 1.

In some embodiments, the bearing ring 3 can be disassembled into two halves. Therefore, the flanged element 2 of the first support 1 with the spheres 4 and relevant cage 41 can be mounted independently of the two halves of the bearing ring 3.

Preferably, the flanged elements 2, 2' of the supports 1, 1' and/or the rings 3 and/or the rolling elements 4 are made from steel or another metal material having mechanical properties which are adequate for ensuring secure and durable operation of the tool-carrying group 1.

In a greatly preferred embodiment, the first support 1 comprises a metal disk 112 which is associated with the flanged element 2 at the side directed towards the second support 1' and which is configured to retain the rolling elements 4 of the first support 1 in the event of a breakage thereof.

In one aspect, the flanged element 2' of the second support 1' comprises a collar 113 which extends along the axis X from the second seat 11' of the bearing ring towards the second end 105 of the shaft. Advantageously, a sealing element 7 is applied between the collar 113 and the shaft. It must be observed that the sealing element 7 is arranged along the axis X between the rolling elements 4 of the second support 1' and the second end 105 of the blade-carrying shaft 101 so as to shield the rolling elements and the relevant rolling tracks against the introduction of dirt (mud, water, dust, etc.) when the blades 103 are operational in the ground.

As shown in Figure 8, the sealing element 7 may be of the type of a cassette seal comprising a plurality of sealing lips 70 which are interposed between an external sealing ring 71 and an internal sealing ring 72. The external sealing ring 71 is received in an annular seat 73 of the collar 113 while the internal sealing ring 72 engages in a sealing manner on the blade-carrying shaft 101.

Preferably, the rings 71, 72 are rigid sealing elements, between which there are interposed the sealing lips 70 which are made from resilient material, such as, for example, an elastomer material. Preferably, the cassette seal further comprises a toroidal spring 74.

The sealing lips 70 inside the cassette seal form a greased serpentine arrangement. Filling with grease reduces the wear, thereby extending the maintenance intervals.

The invention thereby solves the problem set out while achieving a number of advantages, including:
- increasing the loading capacity of the tool-carrying group,
- limiting the introduction of water, mud and dust,
- improving the lubrication,
- increasing the reliability,
- minimizing the weight and the dimensions,
- reducing the production, logistics and storage costs,
- allowing interchangeability with the tool-carrying group of the pre-existing machines.

## Claims

1. A tool-carrying group (10) for agricultural machines, in particular for rotary harrows, comprising two supports (1, 1') which are configured to be mounted axially with spacing on a supporting structure so as to rotatably support a tool-carrying shaft (101) on the supporting structure, each of the supports (1, 1') including
• a flanged element (2; 2') which is configured to be removably secured to the supporting structure and in which an axial seat (11; 11') is defined,
• a bearing ring (3) which is received in the seat (11; 11') and which is configured to engage with the tool-carrying shaft (101),
• a plurality of rolling elements (4) which support the bearing ring (3) in terms of rotation inside the seat (11; 11'), the rolling elements (4) being interposed between a first rolling track (5) which is constructed at the periphery of the bearing ring (3) and a second rolling track (6) which faces the first rolling track (5),
**characterized in that**, in at least one of the supports (1; 1'), the second rolling track (6) is constructed in one piece in the flanged element (2; 2') and is structurally integrated therewith so as to define with the bearing ring (3) and the rolling elements (4) a rolling bearing which is integrated in the flanged element (2; 2').

2. A tool-carrying group (10) according to claim 1, wherein each flanged element (2; 2') is passed through by openings (9) in order to produce a bolted connection with respect to the supporting structure.

3. A tool-carrying group (10) according to claim 2, wherein the openings (9) are holes.

4. A tool-carrying group (10) according to any one of the preceding claims, wherein a first support (1) of the supports (1, 1') comprises a first blind seat (11) which is configured to receive a first end (104) of the tool-carrying shaft (101), and a second support (1') of the supports (1, 1') comprises a second through-seat (11'), the through-hole (8) of which is configured for the passage of the tool-carrying shaft (101).

5. A tool-carrying group (10) according to any one of the preceding claims, wherein the rolling elements (4) are spheres.

6. A tool-carrying group (10) according to claim 5 when dependent on claim 4, wherein the flanged element (2), the bearing ring (3) and the spheres (4) of the first support (1) define a four-point contact ball bearing.

7. A tool-carrying group (10) according to any one of the preceding claims, wherein the second support (2') comprises an axial collar (113) and a cassette seal (7) which is configured to be applied between the collar (113) and the tool-carrying shaft (101).

8. A tool-carrying group (10) according to any one of the preceding claims, wherein each bearing ring (3) is configured to engage with the tool-carrying shaft (101) so as to axially secure the tool-carrying shaft.

9. A tool-carrying group (10) according to claim 8, wherein each bearing ring (3) is configured to engage with the tool-carrying shaft (101) so as to axially secure the tool-carrying shaft by means of an interference connection between the ring (3) and the shaft (101) and/or wherein the bearing rings (3) are configured to abut against respective shoulders of the shaft (101) so as to ensure an axial securing between the rings (3) and the shaft (101).

10. A tool-carrying group (10) according to any one of the preceding claims, wherein in both supports (1, 1') the second rolling track (6) is constructed in one piece in the respective flanged element (2, 2') and is structurally integrated therewith so as to define, with the respective bearing ring (3) and the respective rolling elements (4), a rolling bearing which is integrated in the respective flanged element (2, 2').

11. A tool-carrying group (10) according to claim 4 or according to any one of claims 5 to 10 when dependent on claim 4, wherein the first support (1) comprises a metal disk (112) which is associated with the flanged element (2) at the side directed towards the second support (1') and which is configured to retain the rolling elements (4) of the first support (1) in the event of breakage thereof.

12. An agricultural machine (100) comprising at least one tool-carrying group (10) according to any one of the preceding claims, and furthermore a supporting structure (102) to which the tool-carrying group (10) is removably secured, and a tool-carrying shaft (101) which is rotatably supported on the supporting structure (102) by means of the tool-carrying group (10).

13. An agricultural machine (100) according to claim 12, wherein the supporting structure (102) comprises a box-shaped beam which includes a first wall (106) and a second wall (107) which are facing and spaced apart from each other, the first support (1) being removably secured to the first wall (106), the second support (1') being removably secured to the second wall (107).

14. An agricultural machine (100) according to claim 12 or claim 13, wherein the agricultural machine (100) is a rotary harrow and the tool-carrying shaft (101) is a blade-carrying shaft.

15. An agricultural machine (100) according to any one of claims 12 to 14, comprising a plurality of tool-carrying groups (10) and respective tool-carrying shafts (101).

## Patentansprüche

1. Werkzeugträgergruppe (10) für landwirtschaftliche Maschinen, insbesondere für Kreiseleggen, mit zwei Trägern (1, 1'), die dazu ausgebildet sind, axial beabstandet an einer Tragstruktur montiert zu werden, um eine Werkzeugträgerwelle (101) drehbar an der Tragstruktur zu lagern, wobei jeder der Träger (1, 1')
• ein Flanschelement (2; 2'), das dazu ausgebildet ist, lösbar an der Tragstruktur befestigt zu werden, und in dem ein axialer Sitz (11; 11') definiert ist,
• einen Lagerring (3), der in dem Sitz (11; 11') aufgenommen ist und dazu ausgebildet ist, mit der Werkzeugträgerwelle (101) in Eingriff zu stehen,
• mehrere Wälzkörper (4) aufweist, die den Lagerring (3) innerhalb des Sitzes (11; 11') drehbar lagern, wobei die Wälzkörper (4) zwischen einer ersten Wälzbahn (5), die am Umfang des Lagerrings (3) ausgebildet ist, und einer zweiten Wälzbahn (6), die der ersten Wälzbahn (5) zugewandt ist, angeordnet sind,
**dadurch gekennzeichnet, dass** in mindestens einem der Träger (1; 1') die zweite Wälzbahn (6) einstückig in dem Flanschelement (2; 2') ausgebildet und mit diesem strukturell integriert ist, um mit dem Lagerring (3) und den Wälzkörpern (4) ein Wälzlager zu definieren, das in das Flanschelement (2; 2') integriert ist.

2. Werkzeugträgergruppe (10) nach Anspruch 1, wobei jedes Flanschelement (2; 2') von Öffnungen (9) durchsetzt ist, um eine Schraubverbindung bezüglich der Tragstruktur herzustellen.

3. Werkzeugträgergruppe (10) nach Anspruch 2, wobei die Öffnungen (9) Löcher sind.

4. Werkzeugträgergruppe (10) nach einem der vorhergehenden Ansprüche, wobei ein erster Träger (1) der Träger (1, 1') einen ersten Blindsitz (11) aufweist, der dazu ausgebildet ist, ein erstes Ende (104) der Werkzeugträgerwelle (101) aufzunehmen, und ein zweiter Träger (1') der Träger (1, 1') einen zweiten Durchgangssitz (11') aufweist, dessen Durchgangsloch (8) für den Durchtritt der Werkzeugträgerwelle (101) ausgebildet ist.

5. Werkzeugträgergruppe (10) nach einem der vorhergehenden Ansprüche, wobei die Wälzelemente (4) Kugeln sind.

6. Werkzeugträgergruppe (10) nach Anspruch 5 in Abhängigkeit von Anspruch 4, wobei das Flanschelement (2), der Lagerring (3) und die Kugeln (4) des ersten Trägers (1) ein Vierpunktkugellager definieren.

7. Werkzeugträgergruppe (10) nach einem der vorhergehenden Ansprüche, wobei der zweite Träger (2') einen axialen Kragen (113) und eine Kassettendichtung (7) aufweist, die dazu ausgebildet ist, zwischen dem Kragen (113) und der Werkzeugträgerwelle (101) angebracht zu werden.

8. Werkzeugträgergruppe (10) nach einem der vorhergehenden Ansprüche, wobei jeder Lagerring (3) dazu ausgebildet ist, mit der Werkzeugträgerwelle (101) in Eingriff zu stehen, um die Werkzeugträgerwelle axial zu sichern.

9. Werkzeugträgergruppe (10) nach Anspruch 8, wobei jeder Lagerring (3) dazu ausgebildet ist, mit der Werkzeugträgerwelle (101) in Eingriff zu stehen, um die Werkzeugträgerwelle mittels einer Pressverbindung zwischen dem Ring (3) und der Welle (101) axial zu sichern, und/oder wobei die Lagerringe (3) dazu ausgebildet sind, an jeweiligen Schultern der Welle (101) anzuliegen, um eine axiale Sicherung zwischen den Ringen (3) und der Welle (101) sicherzustellen.

10. Werkzeugträgergruppe (10) nach einem der vorhergehenden Ansprüche, wobei in beiden Trägern (1, 1') die zweite Wälzbahn (6) einstückig in dem jeweiligen Flanschelement (2, 2') ausgebildet und mit diesem strukturell integriert ist, um mit dem jeweiligen Lagerring (3) und den jeweiligen Wälzkörpern (4) ein Wälzlager zu definieren, das in das jeweilige Flanschelement (2, 2') integriert ist.

11. Werkzeugträgergruppe (10) nach Anspruch 4 oder nach einem der Ansprüche 5 bis 10 in Abhängigkeit von Anspruch 4, wobei der erste Träger (1) eine Metallscheibe (112) aufweist, die dem Flanschelement (2) an der Seite zugeordnet ist, die zu dem zweiten Träger (1') gerichtet ist, und die dazu ausgebildet ist, die Wälzkörper (4) des ersten Trägers (1) im Falle eines Bruchs desselben zu halten.

12. Landwirtschaftliche Maschine (100) mit mindestens einer Werkzeugträgergruppe (10) nach einem der vorhergehenden Ansprüche und ferner einer Tragstruktur (102), an der die Werkzeugträgergruppe (10) lösbar befestigt ist, und einer Werkzeugträgerwelle (101), die mittels der Werkzeugträgergruppe (10) drehbar an der Tragstruktur (102) gelagert ist.

13. Landwirtschaftliche Maschine (100) nach Anspruch 12, wobei die Tragstruktur (102) einen kastenförmigen Träger aufweist, der eine erste Wand (106) und eine zweite Wand (107) aufweist, die einander zugewandt und voneinander beabstandet sind, wobei der erste Träger (1) lösbar an der ersten Wand (106) befestigt ist, wobei der zweite Träger (1') lösbar an der zweiten Wand (107) befestigt ist.

14. Landwirtschaftliche Maschine (100) nach Anspruch 12 oder Anspruch 13, wobei die landwirtschaftliche Maschine (100) eine Kreiselegge ist und die Werkzeugträgerwelle (101) eine Messerträgerwelle ist.

15. Landwirtschaftliche Maschine (100) nach einem der Ansprüche 12 bis 14, mit mehreren Werkzeugträgergruppen (10) und jeweiligen Werkzeugträgerwellen (101).

## Revendications

1. Groupe porte-outil (10) pour machines agricoles, en particulier pour herses rotatives, comprenant deux supports (1, 1') configurés pour être montés axialement avec un espacement sur une structure de support de manière à supporter de façon rotative un arbre porte-outil (101) sur la structure de support, chacun des supports (1, 1') incluant
- un élément à bride (2 ; 2') configuré pour être fixé de manière amovible à la structure de support et dans lequel un siège axial (11 ; 11') est défini,
- une bague de roulement (3) qui est reçue dans le siège (11 ; 11') et qui est configurée pour s'engager avec l'arbre porte-outil (101),
- une pluralité d'éléments de roulement (4) qui supportent la bague de roulement (3) en termes de rotation à l'intérieur du siège (11 ; 11'), les éléments de roulement (4) étant interposés entre une première piste de roulement (5) qui est construite à la périphérie de la bague de roulement (3) et une deuxième piste de roulement (6) qui fait face à la première piste de roulement (5),
**caractérisé en ce que**, dans au moins un des supports (1 ; 1'), le deuxième chemin de roulement (6) est construit en une seule pièce dans l'élément à bride (2 ; 2') et est structurellement intégré à celui-ci de manière à définir avec la bague de roulement (3) et les éléments de roulement (4) un palier de roulement qui est intégré dans l'élément à bride (2 ; 2').

2. Groupe porte-outil (10) selon la revendication 1, dans lequel chaque élément à bride (2 ; 2') est traversé par des ouvertures (9) afin de produire une connexion boulonnée par rapport à la structure de support.

3. Groupe porte-outil (10) selon la revendication 2, dans lequel les ouvertures (9) sont des trous.

4. Groupe porte-outil (10) selon l'une quelconque des revendications précédentes, dans lequel un premier support (1) des supports (1, 1') comprend un premier siège borgne (11) configuré pour recevoir une première extrémité (104) de l'arbre porte-outil (101), et un deuxième support (1') des supports (1, 1') comprend un deuxième siège traversant (11') dont l'orifice traversant (8) est configuré pour le passage de l'arbre porte-outil (101).

5. Groupe porte-outil (10) selon l'une quelconque des revendications précédentes, dans lequel les éléments de roulement (4) sont des sphères.

6. Groupe porte-outil (10) selon la revendication 5 lorsqu'elle dépend de la revendication 4, dans lequel l'élément à bride (2), la bague de roulement (3) et les sphères (4) du premier support (1) définissent un roulement à billes à quatre points de contact.

7. Groupe porte-outil (10) selon l'une quelconque des revendications précédentes, dans lequel le deuxième support (2') comprend un collier axial (113) et un joint de cassette (7) qui est configuré pour être appliqué entre le collier (113) et l'arbre porte-outil (101).

8. Groupe porte-outil (10) selon l'une quelconque des revendications précédentes, dans lequel chaque bague de roulement (3) est configurée pour s'engager avec l'arbre porte-outil (101) de manière à fixer axialement l'arbre porte-outil.

9. Groupe porte-outil (10) selon la revendication 8, dans lequel chaque bague de roulement (3) est configurée pour s'engager avec l'arbre porte-outil (101) de manière à fixer axialement l'arbre porte-outil au moyen d'une liaison d'interférence entre la bague (3) et l'arbre (101) et/ou dans lequel les bagues de roulement (3) sont configurées pour s'appuyer contre les épaulements respectifs de l'arbre (101) de manière à assurer une fixation axiale entre les bagues (3) et l'arbre (101).

10. Groupe porte-outil (10) selon l'une quelconque des revendications précédentes, dans lequel, dans les deux supports (1, 1'), le deuxième chemin de roulement (6) est construit en une seule pièce dans l'élément à bride respectif (2, 2') et est structurellement intégré à celui-ci de manière à définir, avec la bague de roulement respective (3) et les éléments de roulement respectifs (4), un roulement qui est intégré dans l'élément à bride respectif (2, 2').

11. Groupe porte-outil (10) selon la revendication 4 ou selon l'une quelconque des revendications 5 à 10 lorsqu'elle dépend de la revendication 4, dans lequel le premier support (1) comprend un disque métallique (112) qui est associé à l'élément à bride (2) du côté dirigé vers le deuxième support (1') et qui est configuré pour retenir les éléments de roulement (4) du premier support (1) en cas de rupture de celui-ci.

12. Machine agricole (100) comprenant au moins un groupe porte-outil (10) selon l'une quelconque des revendications précédentes, et en outre une structure de support (102) à laquelle le groupe porte-outil (10) est fixé de manière amovible, et un arbre porte-outil (101) qui est supporté de manière rotative sur la structure de support (102) au moyen du groupe porte-outil (10).

13. Machine agricole (100) selon la revendication 12, dans laquelle la structure de support (102) comprend une poutre en forme de boîte qui comprend une première paroi (106) et une deuxième paroi (107) qui se font face et sont espacées l'une de l'autre, le premier support (1) étant fixé de manière amovible à la première paroi (106), le deuxième support (1') étant fixé de manière amovible à la deuxième paroi (107).

14. Machine agricole (100) selon la revendication 12 ou la revendication 13, dans laquelle la machine agricole (100) est une herse rotative et l'arbre porte-outil (101) est un arbre porteur de lame.

15. Machine agricole (100) selon l'une quelconque des revendications 12 à 14, comprenant plusieurs groupes porteurs d'outil (10) et des arbres porteurs d'outil respectifs (101).
